# EUROPEAN PATENT APPLICATION

(11) **EP 3 226 558 A1**
(43) Date of publication of application: **04.10.2017**
(21) Application number: 15862656.4
(22) Date of filing: 23.11.2015
(51) Int. Cl.: H04N 13/00

(54) **METHOD FOR REPRODUCING IMAGES WITH A THREE-DIMENSIONAL APPEARANCE**

(30) Priority: 25.11.2014 ES 201431741
(71) Applicant: Davalor Salud S.L., 31192 Tajonar (Navarra) (ES)
(72) Inventor: MARCOS MUÑOZ, Juan José, 31192 Tajonar (Navarra) (ES); MARCOS GONZALEZ, Diego, 31192 Tajonar (Navarra) (ES)
(74) Representative: Cabinet Plasseraud
(86) International application number: PCT/ES2015/070843
(87) International publication number: WO 2016/083642

(57) **Abstract**

The present invention relates to a method of reproducing images with a three-dimensional appearance, using for each eye (2) a variable focal length lens (3) and a display (4) in which a sequence of images is reproduced at high speed, such that each image is broken down into image sections, associating a focal length (d1, d2, d3) of the lens (3) with each image section, successively reproducing the image sections on the display (4), adjusting the focal length (d1, d2, d3) of each of them, to bring about the accommodation of the eye (2) in focusing each reproduced image section.

## Description

### Technical Field

The present invention relates to the entertainment systems in which images with a three-dimensional appearance are reproduced, the invention proposing a method of reproducing a sequence of images before the eyes of the user such that the user uses vision with convergence and accommodation by means of the rapid display of image sections at different focal lengths. The method can be done automatically by computer.

### State of the Art

It is standard practice today to reproduce images with a three-dimensional (3D) appearance in the entertainment industry, such as the video game or the movie industry, where two-dimensional images are reproduced before the eyes of a user that the user perceives as having a three-dimensional appearance.

Systems used today are based on stereoscopic vision, where the user perceives images of three-dimensional objects represented on a planar (two-dimensional) support as having a certain appearance of volume. Stereoscopic vision is based on the capacity of humans' eyes to obtain two two-dimensional images that are identical but taken from different viewpoints, one image for each eye, such that the human brain is responsible for processing the two two-dimensional images and interpreting them as a three-dimensional image.

In that sense, for example, some of the systems used today are based on the simultaneous projection of two two-dimensional images that can be separated using color filters, polarization filters, or time-sequential selective barrier filters, such that one of the images is seen by the right eye and the other one is seen by the left eye, the brain being responsible for processing the received information for the user to perceive the two two-dimensional images shown before their eyes as a three-dimensional image.

However, the perception of the image received with these systems is not similar to the image received when actual three-dimensional objects are being observed, since the ocular system does not work to focus the different three-dimensional objects shown to it. In other words, when are used these systems, the crystalline lens of the eye, which works like an optic lens, is not accommodated for focusing the images shown before it, since the distance between the crystalline lens of the eye and the planar support on which the images are reproduced is always kept constant.

A method for reproducing images on a planar support that can be perceived by the user with a three-dimensional feeling closer to reality is therefore necessary.

### Object of the Invention

According to the present invention, a method of reproducing images with a three-dimensional appearance is proposed, where a sequence of images is reproduced at high speed before the eyes of the user, causing the eye to have to be accommodated for focusing at different distances, the user getting a feeling of three-dimensional vision close to reality.

The method of reproducing images uses, for each eye of the user, one assembly consisting of a variable focal length lens and a display where is reproduced a sequence of images at high speed, 30 ms at most for each reproduced image.

The assembly consisting of the variable focal length lens and the display is connected to a computer from which the images reproduced in the display are controlled and from which the focal length of the lens is changed depending on the images reproduced in the display. In the sense of the invention, focal length is understood as the distance between the visual center of the variable focal length lens and the focal point, or focus, where the lens is focused.

The method of reproducing images of the invention comprises the following steps:
- breaking down each image of the sequence of images into image sections;
- associating a focal length of the variable focal length lens with each image section;
- successively reproducing the image sections on the display, adjusting the focal length of the variable focal length lens for each image section reproduced on the display and depending on the association established in the previous step, causing the accommodation of the eye for focusing each reproduced image section.

Therefore, although the actual distance between the user and the display on which the images are reproduced is always the same, the eye of the user is forced to have to focus at different distances by changing the focal length of the lens. The image sections depicted in the display are therefore focused with respect to the distance at which the user would be observing them in a real world setting. In that sense, image sections containing objects which in reality would be close to the user are focused at a short distance, whereas image sections containing objects which in reality would be far from the user are focused at greater distances.

The focal length of the variable focal length lens is adjusted at least 60 times per second for each image reproduced in the display, such that the user has the sensation of watching the objects depicted on the display in 3-D.

Each image section is encoded according to a width, a height and a depth. Therefore, according to an example of the invention, the focal length of the lens is established as the distance between the lens and a plane passing through the center of the depth of the image section. According to another example, the focal length of the lens is established as the distance between the lens and a plane passing through one end of the depth of the image section.

It has been envisaged that the depth of the image sections is greater the greater the focal length of the lens, such that image sections corresponding to longer focal lengths contain more information than image sections corresponding to shorter focal lengths.

The images that are reproduced for each eye of the user in each display are displaced with respect to one another to produce a stereoscopic effect.

A method of reproducing images which causes the eye of the user to have to be accommodated for focusing the images that are depicted, whereby the user has a feeling of three-dimensional vision that is closer to reality, is thereby obtained.

### Description of the Drawings

Figure 1 shows an example of an image reproduced on a display.
Figures 1A, 1B, 1C depict an example of the different image sections into which the image of the preceding figure can be broken down.
Figure 2 shows a schematic view of the eye of a user and the assembly consisting of the variable focal length lens and the display, a focal length of the lens corresponding to each image section.

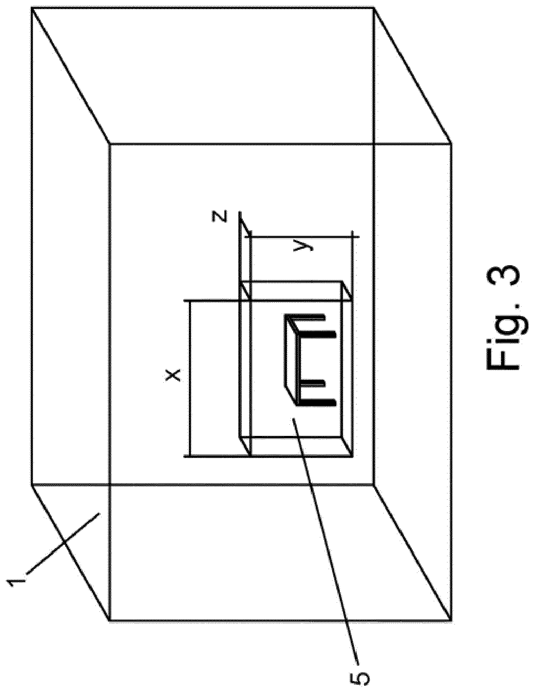

Figure 3 shows a schematic three-dimensional view of an image section.
Figure 4 shows a schematic view of the image section depicted in the preceding figure where the lens focuses on a plane passing through the center of the depth of the image section.

### Detailed Description of the Invention

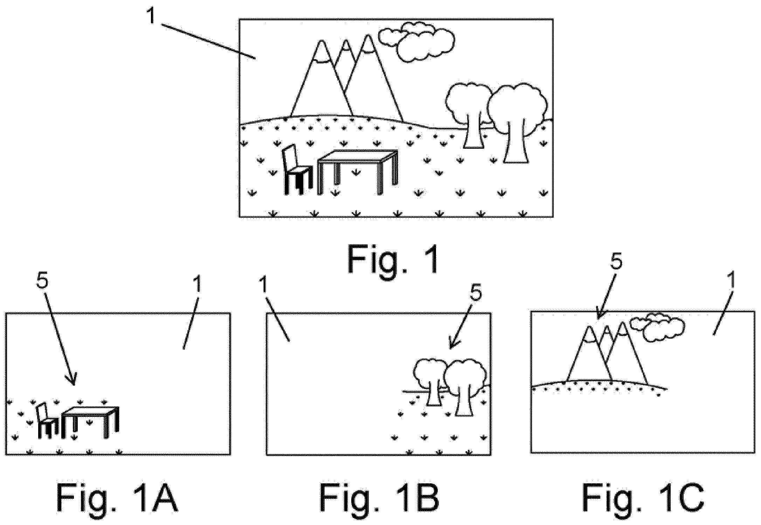

Figure 1 depicts an example of an image (1) belonging to a sequence of images (1) that is reproduced at high speed before the eyes (2) of a user, each image (1) of the sequence of images (1) being reproduced in 30 ms at most. The images (1) depicted before the eyes of the user can correspond with images from a video, images from an interactive video game, or images from the close or remote reality captured by augmented reality cameras.

The method of reproducing images of the invention uses, for each eye (2) of the user, an assembly consisting of a variable focal length lens (3) and a display (4) on which a sequence of images (1) is reproduced. A high-resolution micro-display has been envisaged for being used as the display (4), and an electro-optic lens has been envisaged for being used as the variable focal length lens (3). The assembly consisting of the lens (3) and the display (4) is connected to an electronic controller which generates the image that the display (4) will show and adjusts the focal length of the lens (3). Therefore, the method is for the most part performed automatically by a computer.

By using one lens (3) and display (4) assembly for each eye (2), the images (1) of each display (4) are reproduced such that they are displaced with respect to one another to produce a stereoscopic effect.

The method of the invention consists of the following steps:
- breaking down each image (1) of the sequence of images (1) into image sections (5),
- associating a focal length (d) of the variable focal length lens (3) with each image section (5),
- successively reproducing the image sections (5) on the display (4), adjusting the focal length (d) of the lens (3) for each image section (5) reproduced on the display (4) and depending on the association established in the previous step, causing the accommodation of the eye (1) for focusing each reproduced image section (5).

Figures 1A, 1B and 1C show an example where the image (1) of Figure 1 has been broken down into three image sections (5), such that each image section (5) contains information relating to objects which, in a real world setting, would be located at a similar distance from the user observing them.

In that sense, the image section (5) of Figure 1A contains information about objects which, in reality, would be close to the user; the image section (5) of Figure 1B contains information about objects which, in reality, would be at an intermediate distance from the user; and the image section (5) of Figure 1C contains information about objects which, in reality, would be at a distance far from the user. It is obvious that this example is merely illustrative, and each image (1) can be broken down into as many image sections (5) required.

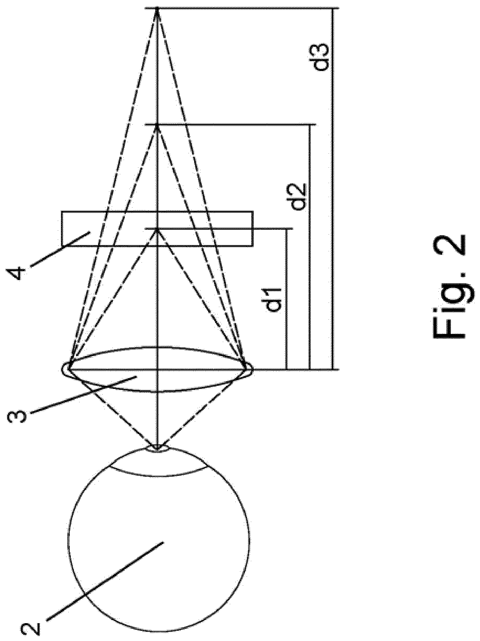

Therefore, a given focal length (d) of the lens (3) is associated with each image section (5), this focal length (d) being substantially identical to the actual focal length at which those objects would be located with respect to the user in a real world setting. In that sense, as shown in the example of Figure 2, the image section (5) of Figure 1A would be encoded according to a first focal length (d1), the image section (5) of Figure 1B would be encoded according to a second focal length (d2), and the image section (5) of Figure 1C would be encoded according to a third focal length (d3).

The reproduction of the images (1) before the eyes (2) of the user is performed at high speed, reproducing one image (1) every 30 ms at most, and adjusting the focal length (d) of the lens (3) at least 60 times per second for each image (1). In that sense, the image sections (5) of each image (1) of a sequence of images (1) are reproduced non-stop before the eyes (2) of the user, focal length (d) of the lens (3) being modified for each image section (5) reproduced on the display (4), so the eye (2) of the user must be accommodated for focusing each image section (5) shown, generating in the user a feeling of watching a three-dimensional setting close to reality.

Each image section (5) corresponding to a focal length (d) of the lens (3) is encoded according to three-dimensional levels. In that sense, each image section (5) corresponds with a width (x), a height (y), and a depth (z).

It has been envisaged that the depth (z) of the image sections (5) is greater the greater the focal length (d) of the lens (3). In other words, the depth (z) of the image sections (5) containing objects which, in reality, would be farther from the user is greater than the depth (z) of the image sections (5) containing objects which, in reality, would be closer to the user. Image sections (5) corresponding to a longer focal length (d) thereby contain more information than image sections (5) corresponding to shorter focal lengths (d), which corresponds with human ocular vision, which is capable of focusing a larger number of objects in the same plane the farther away they are located.

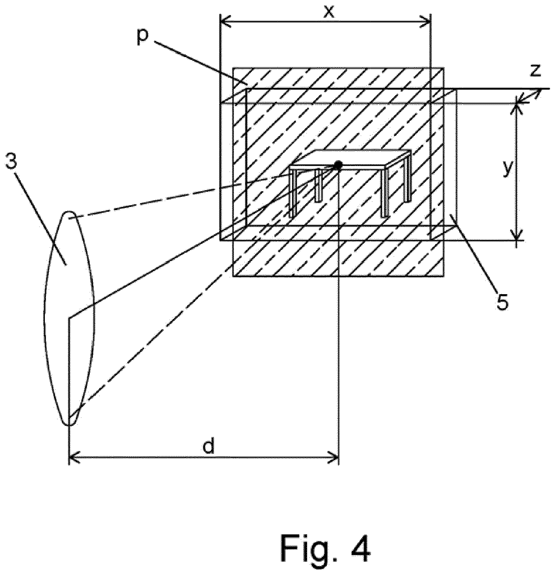

According to the embodiment shown in Figure 4, the focal length (d) of the lens (3) is established as the distance between the lens (3) and a plane (p) passing through the center of the depth (z) of the image section (5). Nevertheless, the focal length (d) of the lens (3) can be established otherwise, for example as the distance between the lens (3) and a plane passing through one end of the depth (z) of the image section (5).

The image sections (5) are reproduced sequentially and independently in the display (4), such that the pixels of the display corresponding to the image sections (5) that are not being depicted remain off. The eye (2) of the user therefore is exclusively centered on focusing the information being depicted at all times.

The method described can be carried out by means of a computer program, and therefore the invention also extends to computer programs as well.

## Claims

1. A method of reproducing images with a three-dimensional appearance, using for each eye (2) an assembly consisting of a variable focal length lens (3) and a display (4) where a sequence of images (1) is reproduced at high speed, **characterized in that** the method comprises the following steps:
- breaking down each image (1) of the sequence of images (1) into image sections (5);
- associating with focal length (d) of the variable focal length lens (3) with each image section (5);
- successively reproducing the image sections (5) on the display (4), adjusting the focal length (d) of the variable focal length lens (3) for each reproduced image section (5) on the display (4) and depending on the association established in the previous step, causing the accommodation of the eye (2) for focusing each reproduced image section (5).

2. The method of reproducing images with a three-dimensional appearance according to claim 1, **characterized in that** the focal length (d) of the variable focal length lens (3) is adjusted at least 60 times per second for each image (1) reproduced in the display (4).

3. The method of reproducing images with a three-dimensional appearance according to claim 1, **characterized in that** each image section (5) is encoded according to a width (x), a height (y) and a depth (z).

4. The method of reproducing images with a three-dimensional appearance according to claim 3, **characterized in that** the focal length (d) of the variable focal length lens (3) is established as the distance between the lens (3) and a plane passing through the center of the depth (z) of the image section (5).

5. The method of reproducing images with a three-dimensional appearance according to claim 3, **characterized in that** the focal length (d) of the variable focal length lens (3) is established as the distance between the variable focal length lens (3) and a plane passing through one end of the depth (z) of the image section (5).

6. The method of reproducing images with a three-dimensional appearance according to claim 3, **characterized in that** the depth (z) of the image sections (5) is greater the greater the focal length (d) of the variable focal length lens (3).

7. The method of reproducing images with a three-dimensional appearance according to claim 1, **characterized in that** the image sections (5) are independently reproduced in the display (4).

8. The method of reproducing images with a three-dimensional appearance according to claim 1, **characterized in that** the images (5) shown in each display (4) for each eye (2) are displaced with respect to one another to produce a stereoscopic effect.

9. Computer program comprising program instructions for a computer to perform the method according to any of claims 1 to 8.
